# EUROPÄISCHE PATENTSCHRIFT

(11) **EP 0 629 161 B1**
(45) Veröffentlichungstag und Bekanntmachung des Hinweises auf die Patenterteilung: **17.01.1996**
(21) Anmeldenummer: 93905326.0
(22) Anmeldetag: 09.03.1993
(51) Int. Cl.: B60R 21/00

(54) **AUSLÖSESCHALTUNG EINES CRASHSENSOR-GESTEUERTEN SCHUTZSYSTEMES EINES FAHRZEUGES**
TRIGGERING CIRCUIT FOR A CRASH-SENSOR-CONTROLLED PROTECTIVE SYSTEM IN A VEHICLE
CIRCUIT DE DECLENCHEMENT DU SYSTEME DE PROTECTION D'UN VEHICULE AUTOMOBILE COMMANDE PAR UN DETECTEUR DE COLLISION

(30) Priorität: 12.03.1992 EP 92104315
(43) Veröffentlichungstag der Anmeldung: 21.12.1994
(73) Patentinhaber: SIEMENS AKTIENGESELLSCHAFT, D-80333 München (DE)
(72) Erfinder: SWART, Marten, D-8407 Obertraubling (DE)
(86) Internationale Anmeldenummer: EP9300534
(87) Internationale Veröffentlichungsnummer: WO9317893

(56) Entgegenhaltungen:
- EP-A- 0 343 578
- EP-A- 0 453 255
- WO-A-89/04779
- WO-A-91/00636
- WO-A-91/05680

## Beschreibung

Die Erfindung geht von dem im Oberbegriff des Patentanspruches 1 definierten Gegenstand aus, der für sich dem Fachmann für solche Schutzsysteme vertraut ist, vgl. z.B. WO-A-91/05680.

Ihm ist auch vertraut, daß ein Hauptproblem solcher Verfahren die Zuverlässigkeit der Zündung bei einem Unfall ist. Der Zündkondensator soll die nötige Energiemenge speichern, um den Gaserzeuger sicher auch dann zünden zu können, wenn das Bordnetz beim Unfall zerstört sein sollte.

Die Erfindung geht aber davon aus, daß der Zündkondensator mit Sicherheit vor dem Unfall genügend aufgeladen sein muß, selbst wenn der Zündkondensator wegen einer länger andauernden Unterspannung im Bordnetz - z.B. wegen langzeitig nur +8V statt +12V - ungenügend viel Zündenergie, und das insbes. mit ungenügend hoher Kondensatorspannung speichert. Die Gasgeneratoren erfordern nämlich eine ausreichend hohe Zündenergie in ausreichend kurzer Zeitdauer. Dazu braucht man auch eine bei Beginn der Zündung ausreichend hohe Zündspannung, vgl. die 30V-Quelle in WO-A-91/05680, Figuren 1 bis 6. Die Vergrößerung der gespeicherten Zündenergie dadurch, daß man die Kondensatorkapazität erhöht, reicht oft nicht, weil auch die Zündspannung des Zündkondensators einen Mindestwert nicht unterschreiten darf.

Eine Abhilfe kann man zwar durch einen Spannungsumwandler im Bordnetz bzw. in der Auslöseschaltung erreichen, welcher aus der Bordnetzspannung von z.B. +8V bis +15 V je nach Bedarf z.B. +20V oder +30V erzeugt, um den Zündkondensator mit der so erhöhten Gleichspannung aufzuladen. Diese Lösung erfordert aber einen erheblichen Schaltungsaufwand, wobei solche Wandler oft auch, gemessen an der hohen Lebensdauer des Fahrzeuges, nicht ausreichend lange betriebssicher sind.

Die Erfindung geht daher einen anderen Weg. Die Aufgabe,
- eine ausreichend hohe Zündenergie bei ausreichend hoher Zündspannung und hoher Lebensdauer auch dann sicherzustellen, wenn die Bordnetzspannung - warum auch immer - recht niedrige Werte aufweist,
wird erfindungsgemäß durch den im Patentanspruch 1 definierten Gegenstand gelöst.

Erfindungsgemäß wird also eine Parallelschaltung von mindestens zwei Zündkondensatoren mit der Bordspannung aufgeladen, wobei im Crashfalle die bisher parallelgeschalteten Zündkondensatoren in Reihe geschaltet werden, wodurch die Summenspannung über der Reihenschaltung ein entsprechend Vielfaches der Bordspannung beträgt. Schon wenn nur zwei Zündkondensatoren angebracht werden, beträgt die Summenspannung bereits das Doppelte der Bordspannung. Man kann aber auch zunächst mehr als zwei parallelgeschaltete Zündkondensatoren mit der Bordspannung aufladen und alle diese Zündkondensatoren untereinander in Reihe schalten, wodurch man bei Bedarf eine entsprechend hohe Summenspannung erreicht. Man kann also durch die erfindungsgemäß Methode der Zündspannungsvergrößerung praktisch jede beliebige erwünschte Summenspannung erreichen.

Die Erfindung wurde zwar zunächst als Verbesserung der in der WO-A-91 / 05680 beschriebenen Auslöseschaltung konzipiert. Es zeigte sich aber rasch, daß die Erfindung auch allgemein, auf alle im Oberbegriff des Patentanspruches 1 definierten Auslöseschaltungen anwendbar ist.

Die in den Unteransprüchen definierten Gegenstände gestatten, zusätzliche Vorteile zu erreichen. U.a. gestatten nämlich die zusätzlichen Maßnahmen gemäß dem Patentanspruch
2, bei einem Unfall zumindest einen erheblichen Anteil der in den Zündkondensatoren gespeicherten Zündenergie dem betreffenden Gaserzeuger mit hohem Wirkungsgrad zuleiten zu können, statt bei dem Unfall
•• die Spannungsquelle (Batterie) des Bordnetzes mit der in den Zündkondensatoren gespeicherten Zündenergie aufzuladen, falls dann das Bordnetz an sich noch intakt ist, oder
•• Zündenergie sinnlos zu vergeuden, falls das Bordnetz wegen des Unfalls bereits einen Kurzschluß aufweist,
3 und 4, wenig aufwendige, unterschiedliche Varianten für die hochohmige Trennung zu bieten,
5, bei Beginn der Zündung dem Gaserzeuger die Zündenergie mit besonders hoher Zündspannung zuleiten zu können, aber bei nachlassender Summenspannung den Rest der Zündenergie dem Bordnetz entnehmen zu können, sofern dann das Bordnetz noch ausreichend intakt ist - notfalls wird auch der Rest an notwendiger Zündenergie aus den immer noch in Reihe geschalteten Zündkondensatoren geliefert, wenn nämlich das Bordnetz als Energielieferant ausfällt,
6, mit besonders wenig Zündkondensatoren die erhöhte Zündspannung bei Beginn der Zündung auch dann erfindungsgemäß zur Verfügung stellen zu können, wenn mehrere Gaserzeuger nacheinander zu zünden sind, also z.B. wenn mehrere Airbags nacheinander aufzublasen und / oder wenn sowohl Airbags als auch Gurtstrammer und evtl. auch noch gasangetriebene Überrollbügel nacheinander zu aktivieren sind,
7, die einzelnen Gaserzeuger individuell zu verschiedenen Zeitpunkten zünden zu können,
8 und 9, auf besonders einfache Weise zweierlei Fahrzeugerschütterungen unterscheiden zu können, nämlich solche,
•• welche einer echten Crashsituation entsprechen, welche also die Zündung des Gaserzeugers auslösen sollen, und
•• welche nur einer Unebenheit der Fahrbahn, also z.B. einem Schlagloch oder einem überfahrenen Ast entsprechen, welche also noch nicht die Zündung des Gaserzeugers auslösen sollen,
10, die Zuverlässigkeit der Auslöseschaltung auch noch Jahre nach dem Einbau in das Fahrzeug leicht prüfen zu können, sowie
11, diese Prüfungen trotz der dann in Reihe geschalteten Zündkondensatoren gefahrlos, nämlich ohne die Gaserzeuger zu zünden, durchgeführt werden können.

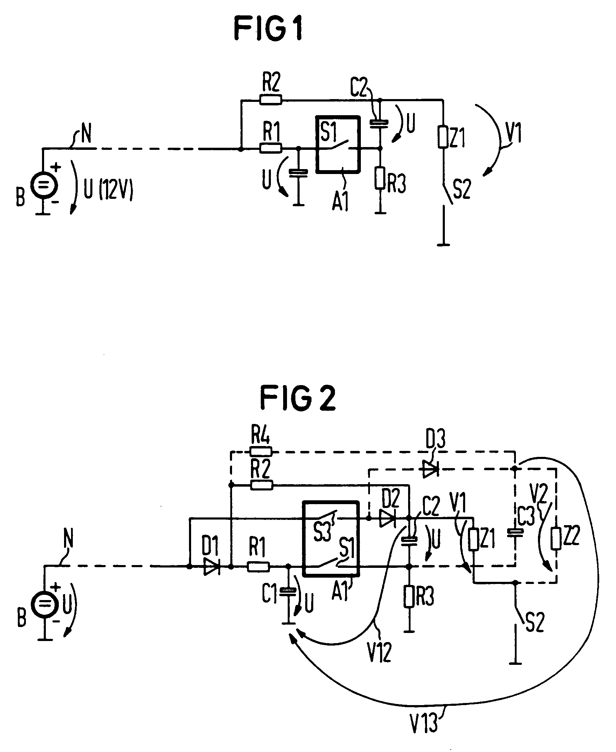

Die Erfindung und Weiterbildungen derselben werden anhand der in den vier Figuren gezeigten Schemen von Ausführungsbeispielen der Erfindung weiter erläutert, welche der Übersichtlichkeit wegen jeweils möglichst einfach dargestellt wurden. Dabei zeigt die Figur
1 eine möglichst einfach aufgebaute Auslöseschaltung, besonders um das Grundkonzept der Erfindung zu erläutern,
2 eine im Vergleich zu der Figur 1 kompliziertere Auslöseschaltung zur Zündung von zwei verschiedenen Gaserzeugern, wobei durch eine entsprechende Dimensionierung ihrer Bauteile insbes. auch erreicht werden kann, daß bei Beginn der Zündung die Reihenschaltung der Zündkondensatoren, aber nach einiger Zeit der Rest der Zündung evtl. auch durch das Bordnetz übernommen werden kann, falls nämlich letzteres dann noch ausreichend intakt sein sollte,
3 eine im Vergleich zu der Figur 2 noch kompliziertere Auslöseschaltung, wobei nämlich insbes. die beiden Gaserzeuger zu unterschiedlichen Zeitpunkten zündbar sind und ferner ein zweiter Crashsensor, ein Überspannungsschutz und eine Testanordnung angebracht sind, sowie
4 ein Beispiel für den Aufbau des Überspannungsschutzes.

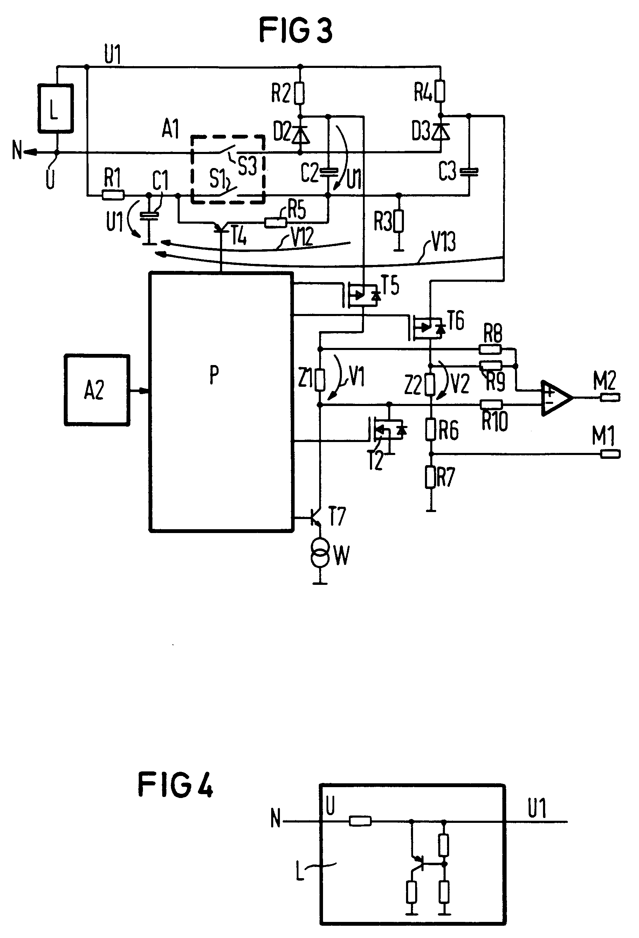

Die Figuren 1 bis 3 zeigen also Ausführungsbeispiele der erfindungsgemäßen Auslöseschaltung. Sie sind alle jeweils durch die Crashsensoren A gesteuert, vgl. den hier beispielhaft
- jeweils einen oder zwei Kontakte S1/S3 aufweisenden Crashsensor A1 in den Figuren 1 bis 3, sowie
- den weiteren Crashsensor A2 mit seinen von dem Mikroprozessor P / der Auswerteelektronik P gesteuerten Kontakten T5 und T6 in der Figur 3.

Diese Crashsensoren A sollen jeweils erkennen, ob Verzögerungen bzw. Beschleunigungen auftreten, welche die Schutzsysteme von Fahrzeugen, also z.B. eine Airbag- oder Gurtstrammeranordnung auslösen sollen.

Diese Crashsensoren A können so aufgebaut sein, daß sie analoge Ausgangssignale bzw. Sensorwerte liefern, welche mehr oder weniger kontinuierlich von den Verzögerungen bzw. Beschleunigungen abhängen. Hierbei kann zusätzlich jeweils noch eine Auswerteelektronik, vgl. den Mikroprozessor P in der Figur 3, angebracht sein, welche aus den betreffenden Sensorwerten die Schwere, evtl. sogar den Verlauf den Unfalls mehr oder weniger präzise ermittelt und entsprechend die Schutzsysteme steuert.

Die Crashsensoren A können aber auch so aufgebaut sein, daß sie digitale Sensorwerte liefern, z.B. weil sie zusätzlich einen A/D-Wandler enthalten, und / oder weil sie z.B. seismische Massen enthalten, welche oberhalb bestimmter Schwellwerte der Verzögerungen bzw. Beschleunigungen elektrische Kontakte schließen, die EIN-/AUS-Signale abgeben.

Die in der Figur 3 gezeigte Auslöseschaltung unterscheidet sich von den in den Figuren 1 und 2 gezeigten Beispielen durch die zusätzlichen Kontakte T5 und T6, welche mittels der Auswerteschaltung P, die hier ein Prozessor P sein kann, vom Crashsensor A2 individuell so gesteuert werden können, daß zuerst der erste Gaserzeuger, z.B. Z1, und erst später der andere Gaserzeuger, vgl. Z2, - beide Gaserzeuger Z zu den für sie jeweils idealen Zeitpunkten - gezündet werden können.

Alle oder ein Teil der Kontakte können also elektronisch gesteuerte Kontakte T, also z.B. Schalttransistoren sein, vgl. insbes. T2 T5 und T6 in der Figur 6. Sie können aber auch mechanisch ausgelöste Kontakte S sein, vgl. S1 in den Figuren 1 bis 3 sowie S3 in den Figuren 2 und 3.

Diese Crashsensoren A enthalten, oder steuern, also jeweils einen oder mehrere Kontakte S und / oder T, welche ihrerseits die Entladung der Zündkondensatoren C und damit die Zündung der Gaserzeuger Z steuern, vgl.
- die Zündkondensatoren C1 und C2 in den Figuren 1 bis 3 sowie die Zündkondensatoren C3 in den Figuren 2 und 3,
- ferner die Gaserzeuger Z1 in den Figuren 1 bis 3 sowie die zusätzlichen Gaserzeuger Z2 in den Figuren 2 und 3.
Die Zündkondensatoren C stellen hierbei über das Bordnetz N aufgeladene Energiequellen C für die Zündung des Gaserzeugers Z dar, wobei die Gaserzeuger Z ihrerseits jeweils die Sprengladungen Z selber, oder die für die Zündung solcher Sprengladungen dienenden Zündpillen Z darstellen können.

Sobald also
- bei den Crashsensoren A1 gemäß den Figuren 1 bis 3, und
- zusätzlich beim Crashsensor A2 gemäß der Figur 3, Sensorwerte auftreten, welche gewissen, bei einem schweren Unfall auftretenden Verzögerungen oder Beschleunigungen des Fahrzeuges entsprechen, schützen diese Auslöseschaltungen einen oder mehrere Fahrzeug-Insassen vor Verletzungen, indem dann
- mittels ihrer Kontakte, vgl. S1 S2 S3 T2 T5 T6, und mittels der Zündkondensatoren, vgl. C1 C2 C3,
die Gaserzeuger Z gezündet werden, welche jeweils mittels ihrer Gase die die Insassen schützenden Schutzsysteme aktivieren.

Eine Besonderheit der erfindungsgemäßen Auslöseschaltungen besteht darin, daß die Zündkondensatoren Z
- vor dem Unfall parallelgeschaltet aus dem elektrischen Bordnetz N auf ihre Zündspannung U bzw. U1 aufgeladen werden und
- beim Unfall in Reihe geschaltet entladen werden:
Dazu sind erfindungsgemäß in den Auslöseschaltungen jeweils mehrere, also mindestens zwei, Zündkondensatoren C in umschaltbarer Weise angebracht, vgl.
- jeweils die beiden Zündkondensatoren C1 und C2 gemäß den Figuren 1 bis 3, sowie
- teilweise zusätzlich den dritten Zündkondensator C3 gemäß den - zwei statt nur einen einzigen Gaserzeuger Z zeigenden - Figuren 2 und 3.

Die verschiedenen Zündkondensatoren C sind also vor dem Unfall in einer Weise parallelgeschaltet, daß sie alle auf eine der Bordnetzspannung U entsprechende Kondensatorspannung, - z.B. exakt auf den Wert U oder eben auf einen reduzierten Wert U1, aufgeladen werden, vgl. die Figuren 1 bis 3 in einem Betriebszustand, bei dem die gezeigten Kontakte S nichtleitend sind. Dann werden nämlich die Zündkondensatoren
- C1 über den Vorwiderstand R1 und
- C2 über die Vorwiderstände R2 und R3 gemäß den Figuren 1 und 2 auf die Bordnetzspannung U aufgeladen, bzw. gemäß der Figur 3 auf eine spannungsbegrenzte Spannung U1 aufgeladen, sowie die Zündkondensatoren
- C3 über die Vorwiderstände R4 und R3 gemäß der Figur 2 auf die Spannung U bzw. gemäß der Figur 3 auf die Spannung U1. Vor dem Unfall werden also die untereinander, bezogen auf das Bordnetz N, parallel geschalteten Zündkondensatoren C alle jeweils auf die - konstant gehaltene oder variable
- Bordnetzspannung U aufgeladen, also z.B. variabel auf +8V oder +12V oder +15V, oder auf eine konstant gehaltene Bordnetzspannung U oder auf eine evtl. nach oben begrenzte Spannung U1.

Beim Unfall werden aber diese Zündkondensatoren C jeweils niederohmig so in Reihe geschaltet, daß - zumindest bei Beginn der Zündung - die jeweilige, aktuelle Summenspannung V über dieser Reihenschaltung größer ist als für sich gesehen die verschiedenen einzelnen aktuellen Kondensatorspannungen betragen. Diese Umschaltung der Zündkondensatoren C, welche ihre Parallelschaltung in eine Reihenschaltung umwandelt, erfolgt erfindungsgemäß mittels mindestens eines einzigen Kontaktes S, dessen Schaltzustand den jeweils gemessenen Verzögerungen bzw. Beschleunigungen, also den Sensorwerten der Crashsensoren A entspricht, vgl. die Figuren 1 bis 3 in einem Betriebszustand, bei welchem alle Kontakte der Crashsensoren A, vgl. S in allen drei Figuren und T2, T5 und T6 in der Figur 3 - leitend sind. Dann werden nämlich die Gaserzeuger
- Z1 niederohmig über die Reihenschaltung Kontakt S2 - Masse - Zündkondensator C1 - Kontakt S1 - Zündkondensator C2 gemäß den Figuren 1 und 2 gezündet,
- Z1 niederohmig über die Reihenschaltung Kontakt T2 - Masse - Zündkondensator C1 - Kontakt S1 - Zündkondensator C2 - Kontakt T5 gemäß der Figur 3, sowie
- Z2 niederohmig über die Reihenschaltung Kontakt S2 - Masse - Zündkondensator C1 - Kontakt S1 - Zündkondensator C3 gemäß der Figur 2, sowie
- Z2 niederohmig über die Reihenschaltung Kontakt T2 - Masse - Zündkondensator C1 - Kontakt S1 - Zündkondensator C3 - Kontakt T6 gemäß der Figur 3.

Bei allen drei gezeigten erfindungsgemäßen Beispielen werden demnach vor dem Unfall jeweils zwei - oder mehr als zwei - zunächst noch parallelgeschaltete Zündkondensatoren C mit der Bordspannung U bzw. U1 aufgeladen. Beim Unfall werden die bisher parallelgeschalteten Zündkondensatoren C in Reihe geschaltet, wodurch die Summenspannung V über der Reihenschaltung der Zündkondensatoren C zur Zündung der Gaserzeuger Z benutzt wird, vgl. die Summenspannungen V1, V12 bzw. V13 in den Figuren 1 bis 3. Diese Summenspannung V beträgt bei Beginn der Zündung jeweils ein entsprechend Vielfaches der Bordspannung U bzw. U1. Die Summenspannung V nimmt im Laufe der anschließenden Zündungsphasen ab, d.h. der aktuelle Wert von V nimmt dann ab, wobei dann auch der Innenwiderstand der Gaserzeuger Z meistens abrupt abnimmt. Die aktuellen Spannungen V1 bzw. V2 über den Gaserzeugern Z mögen in diesen späteren Phasen der Zündung im Einzelfall jeweils auch mehr oder weniger verringert gegen V12 und V13 sein, vgl. die Figuren 2 und 3, falls nämlich in der niederohmigen Reihenschaltung gewisse Restwiderstände, vgl. z.B. T5 und T6 in der Figur 3, wirksam bleiben.

Schon wenn nur zwei auf die erfindungsgemäße Weise umschaltbare Zündkondensatoren C angebracht werden, vgl. die Figur 1, beträgt die Summenspannung V1 bei Beginn der Zündung bereits das Doppelte der Bordspannung. Man kann aber auch zunächst mehr als zwei parallelgeschaltete Zündkondensatoren mit der Bordspannung U bzw. U1 aufladen, um mit der Reihenschaltung von z.B. drei oder vier Zündkondensatoren C einen einzigen Gaserzeuger Z zu zünden, wodurch man bei Bedarf die Summenspannung über der Reihenschaltung bei Beginn der Zündung entsprechend weiter stark erhöhen kann. Selbst wenn die Bordnetzspannung gelegentlich sehr niedrig sein sollte, kann man dann durch das erfindungsgemäße Maßnahmenbündel zur Zündspannungsvergrößerung praktisch jede beliebige erwünschte Summenspannung bei Beginn der Zündung erreichen.

Die Erfindung gestattet also, mittels der Umschaltung von Parallelschaltung auf Reihenschaltung eine ausreichend hohe Zündenergie mit
•• bei Beginn der Zündung und in jeder späteren Phase der Zündung
ausreichend hoher Zündspannung auch dann sicherzustellen, wenn die Bordnetzspannung - warum auch immer - vor der Zündung und bei Beginn der Zündung recht niedrige Werte aufweist. Trotzdem darf aber, und muß zwar nicht, bei der Erfindung die Spannung U der Spannungsquelle B des Bordnetzes N starke Toleranzen aufweisen,
•• und zwar insbes. bei dem in der Figur 3 gezeigten Beispiel, aber im Prinzip auch bei den in den Figuren 1 und 2 gezeigten Beispielen
also z.B. ohne weiteres zwischen +8V und + 15V schwanken, z.B. als Folge einer unterschiedlich stark aufgeladenen Batterie B oder weil die Lichtmaschine B eine nur unpräzis geregelte Bordnetzspannung U liefert. Das erfindungsgemäße Maßnahmenbündel gestattet eben auch dann sehr hohe Zündspannungen V1 bzw. V2 zu erreichen, wenn die Spannung U sehr klein ist.

Weil man zusätzlich die Kapazität der erfindungsgemäß gesteuerten Zündkondensatoren C im Prinzip beliebig hoch machen kann, können bei den erfindungsgemäßen Auslöseschaltungen die Zündkondensatoren außerdem mit Sicherheit vor dem Unfall genügend aufgeladen werden, um die Zündung zuverlässig auszulösen, selbst wenn der einzelne Zündkondensator C, für sich betrachtet, wegen einer länger andauernden Unterspannung U im Bordnetz - z.B. wegen langzeitig nur +8V statt +12V - ungenügend viel Zündenergie speichert, und das mit, für sich betrachtet, ungenügend hoher Kondensatorspannung U bzw. U1.

Die in der Figur 3 gezeigte Einheit L begrenzt oder reduziert die Bordnetzspannung U auf einen Wert U1. Ein Beispiel dafür ist in der Figur 4 gezeigt. Diese Einheit L schützt insbes. die nachgeschalteten Zündkondensatoren C vor allfällig im Bordnetz N auftretenden Überspannungen. Dadurch können an die Spannungsfestigkeit der Zündkondensatoren C entsprechend geringere Anforderungen gestellt werden, bzw. es kann die Lebensdauer dieser Zündkondensatoren C erhöht werden. Die in den Figuren gezeigten Auslöseschaltungen unterscheiden sich also u.a. dadurch, daß die auf die Zündkondensatoren C gemäß den Figuren 1 und 2 auf die Bordnetzspannung U und gemäß der Figur 3 auf die begrenzte bzw. reduzierte Spannung U1 aufgeladen werden.

Dem Fachmann ist für sich vertraut, daß er elektronische Schalter bzw. Kontakte mittels Überbrückungsdioden überspannungsfest machen kann.

Um bei einem Unfall mit hohem Wirkungsgrad die in den Zündkondensatoren C gespeicherten Zündenergie dem betreffenden Gaserzeuger Z zuleiten zu können, kann man diese Zündkondensatoren (spätestens) bei Beginn der Zündung mehr oder weniger hochohmig - also auch völlig - vom Bordnetz N trennen. Das kann man z.B. dadurch erreichen, daß die Zündkondensatoren vor dem Unfall jeweils über relativ hochohmige Widerstände, vgl. R1 bis R4 in den Figuren, und / oder über Dioden, vgl. D1 bis D3 in den Figuren, aufgeladen werden, wobei diese Dioden D so gepolt angebracht werden, daß sie, soweit sie an der Aufladung der Zündkondensatoren C beteiligt sind, für die Aufladung der Zündkondensatoren C niederohmig und für den beim Unfall auftretenden Kondensatorzündstrom hochohmig sind - jedenfalls solange die betreffende aktuelle Zündkondensatorspannung größer als die aktuelle Spannung U bzw. U1 des Bordnetzes ist. Man kann dadurch vermeiden, daß der Kondensatorzündstrom, statt weitgehend über den Gaserzeuger Z, über die Bordnetzleitungen N in Richtung Batterie B entladen werden, falls dann das Bordnetz an sich noch intakt ist, oder daß die Zündenergie sinnlos wegen eines durch den Unfall aufgetretenen Kurzschlusses im Bordnetz vergeudet wird.

Um die Zuverlässigkeit der Auslöseschaltung weiter zu erhöhen, kann man bei Beginn der Zündung dem Gaserzeuger Z die Zündenergie mit besonders hoher Summenspannung V zuleiten, aber bei nachlassender Summenspannung V den Rest der Zündenergie dem Bordnetz N entnehmen, sofern dann das Bordnetz noch ausreichend intakt ist. Nur notfalls wird auch der Rest an Zündenergie aus den dann immer noch in Reihe geschalteten Zündkondensatoren C geliefert, wenn also dann das Bordnetz als Energielieferant ausfällt. Hierzu kann man in der Auslöseschaltung eine Parallelschaltung, vgl. S3 D2 D3 in den Figuren 2 und 3, zur beim Unfall gebildeten Reihenschaltung der Zündkondensatoren C anbringen. Beim Unfall soll diese Parallelschaltung S3 D2 D3 die Spannungsquelle B des Bordnetzes N mit dem Gaserzeuger Z verbinden. Die Parallelschaltung S3 D2 D3 enthält einen sich beim Unfall schließenden Kontakt, vgl. S3, sowie eine oder mehrere so gepolte Dioden D2 D3, daß beim Unfall zusätzlich ein Bordnetzzündstrom aus der Spannungsquelle B des Bordnetzes N über den Gaserzeuger Z mit einer über dem Gaserzeuger Z auftretenden Restspannung V geleitet wird, zumindest solange das Bordnetz N intakt ist und zumindest solange die dem Gaserzeuger Z aus dem Bordnetz N zuleitbare Restspannung V größer ist als die aktuelle Summenspannung V der diesen Gaserzeuger Z zündenden, in Reihe geschalteten Zündkondensatoren C.

Um mit besonders wenig Zündkondensatoren C die erhöhte Zündspannung als Summenspannung V bei Beginn der Zündung auch dann erfindungsgemäß zur Verfügung stellen zu können, wenn mehrere Gaserzeuger Z nacheinander zu zünden sind, also z.B. wenn mehrere Airbags nacheinander aufzublasen und / oder wenn sowohl Airbags als auch Gurtstrammer und evtl. auch noch gasangetriebene Überrollbügel nacheinander zu aktivieren sind, kann man mehr Zündkondensatoren C als Gaserzeuger Z anbringen. Beispiele dafür zeigen die Figuren 2 und 3. Der Zündkondensator C2 ist jeweils dem Gaserzeuger Z1 fest zugeordnet, ähnlich der Zündkondensator C3 dem Gaserzeuger Z2. Der weitere Zündkondensator C1 ist aber beiden Gaserzeugern Z zugeordnet. Beim Unfall enthält die einen Gaserzeuger Z mit Zündenergie beliefernde Reihenschaltung der Zündkondensatoren C dann jeweils einen dem betreffenden Gaserzeuger Z fest zugeordneten Zündkondensator C sowie den weiteren Zündkondensator C. Allgemeiner formuliert, kann man also zur Verringerung der Anzahl der Zündkondensatoren C zwar mehr Zündkondensatoren C als Gaserzeuger Z anbringen. Je ein Zündkondensator C ist aber einem Gaserzeuger Z fest zugeordnet, wobei der weitere Zündkondensator C, oder die weiteren Zündkondensatoren C, jedoch mehreren Gaserzeugern Z zugeordnet sind, so daß beim Unfall die einen Gaserzeuger Z mit Zündenergie beliefernde Reihenschaltung der Zündkondensatoren C jeweils einen dem betreffenden Gaserzeuger Z fest zugeordneten Zündkondensator C sowie einen weiteren Zündkondensator C enthält.

Um zusätzlich die einzelnen Gaserzeuger Z individuell zu verschiedenen Zeitpunkten zünden zu können, kann jedem fest zugeordneten Zündkondensator C ein eigener Zündschalter S zugeordnet werden, über welchen die Zündung individuell zum für diesen Gaserzeuger Z durch die Auswerteelektronik P individuell bestimmten Zeitpunkt erfolgen kann.

In für sich bekannter Weise können zur Verbesserung der Zuverlässigkeit der Auslöseschaltung auf besonders einfache Weise zweierlei Fahrzeugerschütterungen leicht unterschieden werden, nämlich solche, welche einer echten Crashsituation entsprechen, welche also die Zündung des Gaserzeugers auslösen sollen, und solche, welche nur einer Unebenheit der Fahrbahn, also z.B. einem Schlagloch oder einem überfahrenen Ast entsprechen, welche also noch nicht die Zündung des Gaserzeugers auslösen sollen. Dazu kann mindestens einer der Crashsensoren A ein Safingsensor A, also ein ausreichend empfindlicher Sensor A sein, dessen (analoge oder digitale) Ausgangssignale (ausschließlich oder zusätzlich) auch jene Verzögerungen bzw. Beschleunigungen erkennen lassen, welche noch unterhalb jener Schwelle liegen, oberhalb welcher der Gaserzeuger Z gezündet wird. Dadurch, daß zweierlei Sensortypen mit unterschiedlichen Charakteristiken verwendet werden, ist die Zuverlässigkeit vergrößert, mit der der Unfall als solcher erkannt wird. Bevorzugt kann dazu mindestens ein Crashsensor, vgl. A1, analoge Ausgangssignale liefern, welche mittels einer durch einen Mikroprozessor P gebildeten Auswerteelektronik P in ein oder mehrere, einen oder mehrere Kontakte S bzw. T steuernde EIN-/AUS-Signale umgesetzt werden.

Um die Zuverlässigkeit der Auslöseschaltung auch noch Jahre nach dem Einbau in das Fahrzeug leicht überprüfen zu können, kann an einen oder an mehrere ihrer Schaltungspunkte zu Testzwecken vorübergehend eine oder mehrere Stromquellen bzw. Spannungsquellen, vgl. W in der Figur 3, angeschaltet werden, vgl. den Testschalter T7. Vgl. ferner den Testschalter T4, welcher zu Testzwecken die Zündkondensatoren C1, C2 - aus Sicherheitsgründen hochohmig über den Zusatzwiderstand R5 - so in Reihe schaltet, daß die Summenspannung bzw. deren Auswirkungen gemessen werden können, wobei wegen jener Hochohmigkeit der Reihenschaltung keine Gefahr besteht, daß der / die Gaserzeuger Z gezündet werden.

Die Auslöseschaltung kann also zu Testzwecken zusätzlich so dimensioniert werden, daß während des Testes über den Gaserzeuger Z fließende Ströme kleiner sind, als zur Zündung des Gaserzeugers Z nötig wäre, sowie daß zumindest während des Testes Meßpunkte der Auslöseschaltung, z.B. über entkoppelnde Meßwiderstände R6 R7 R8 R9 R10, mit einer Meßanordnung, vgl. M1 M2, verbunden sind. Vgl. dazu die oben zitierte - WO 91 / 05680.

In den gezeigten Beispielen sind zwar - nur zur besseren Veranschaulichung des erfindungsgemäßen Konzeptes - jeweils mehr Zündkondensatoren C als Gaserzeuger Z angebracht. Im Prinzip kann die erfindungsgemäße Auslöseschaltung aber auch gleich viele oder weniger Zündkondensatoren C als Gaserzeuger Z enthalten, wenn nämlich die Zündenergie der einer einzelnen Reihenschaltung von Zündkondensatoren C gemeinsam auf viele Gaserzeuger Z verteilt wird. Im Prinzip müssen nämlich in einer erfindungsgemäßen Auslöseschaltung nur mindestens zwei Zündkondensatoren C angebracht sein, die parallel aufgeladen aber in Reihe entladen werden, - wobei dann aber im Prinzip die Anzahl der Gaserzeuger Z beliebig ist. Man sollte dann aber in für sich bekannter Weise verhindern, daß ein besonders rasch zündender Gaserzeuger Z einen anderen trägeren parallelgeschalteten Gaserzeuger kurzschließt, bevor der letztere ebenfalls zündete, vgl. z.B. die - EP-B-0 284 728.

## Patentansprüche

1. Auslöseschaltung eines Crashsensor-gesteuerten (A) Schutzsystemes für den Insassen eines Fahrzeuges, z.B. einer Airbag- oder Gurtstrammeranordnung,
- mit einem vor dem Unfall aus dem elektrischen Bordnetz (N) auf eine Kondensatorspannung (U) aufgeladenen Zündkondensator (C) als Energiequelle zur Zündung eines Gaserzeugers (Z), also zur Zündung einer Sprengladung oder zur Zündung einer Zündpille (Z) der Sprengladung, und
- mit mindestens einem Crashsensor (A),
•• welcher das Auftreten der die Zündung auslösenden Sensorwerte erkennt und
•• welcher mittels eines oder mittels mehrerer Kontakte (S, T) die Zündung des Gaserzeugers (Z) durch Entladung des Zündkondensators (C) steuert,
**dadurch gekennzeichnet,**
- daß mehrere Zündkondensatoren (C) in umschaltbarer Weise angebracht sind,
•• welche (C) nämlich vor dem Unfall parallelgeschaltet sind und dann auf eine der Bordnetzspannung (U) entsprechende Kondensatorspannung aufgeladen werden, und
•• welche (C) beim Unfall mittels mindestens eines einzigen Kontaktes (S, T) niederohmig so in Reihe geschaltet werden, daß - zumindest beim Beginn der Zündung - die aktuelle Summenspannung (V) über dieser Reihenschaltung größer ist als für sich gesehen die einzelnen Kondensatorspannungen (U), und
- daß die Summenspannung (V) dem Gaserzeuger (Z) mittels mindestens eines einzigen Kontaktes (S, T) niederohmig zuleitbar ist.

2. Auslöseschaltung nach Patentanspruch 1,
**dadurch gekennzeichnet,**
- daß bei Beginn der Zündung, nämlich unmittelbar nach dem Betätigen des Kontaktes / der Kontakte (S, T), die Zündkondensatoren (C) hochohmig (R1, R2, R4, evtl. auch D1, D2, D3) vom Bordnetz (N) getrennt sind, so daß dann durch diese Trennung
•• die Summenspannung (V) größer als die Spannung (U, U1) im Bordnetz (N) ist und
•• die Ströme der Zündkondensatoren (C) im wesentlichen über den Gaserzeuger (Z) / die Gaserzeuger (Z) statt über das Bordnetz (N) fließen.

3. Auslöseschaltung nach Patentanspruch 2,
**dadurch gekennzeichnet,**
- daß dann die hochohmige Trennung von zumindest einem Teil der Zündkondensatoren (C) vom Bordnetz (N) durch jeweils mindestens einen hochohmigen Widerstand (R1, R2, R3, R4, D1) gebildet wird, über welchen (R, D) vor dem Unfall auch die Aufladung der betreffenden Zündkondensatoren (C) erfolgte.

4. Auslöseschaltung nach Patentanspruch 2 oder 3,
**dadurch gekennzeichnet,**
- daß dann die hochohmige Trennung durch mindestens eine Diode (D) gebildet wird, welche für die Aufladung der Zündkondensatoren (C) niederohmig und für den beim Unfall auftretenden Kondensatorzündstrom hochohmig ist, solange die betreffende aktuelle Zündkondensatorspannung größer als die aktuelle Spannung (U, U1) im Bordnetz (N) ist.

5. Auslöseschaltung nach einem der vorhergehenden Patentansprüche,
**dadurch gekennzeichnet,**
- daß eine Parallelschaltung (S3, D2, D3) zur beim Unfall gebildeten Reihenschaltung der Zündkondensatoren (C) angebracht ist, wobei beim Unfall die Parallelschaltung (S3, D2, D3) die Spannungsquelle (B) des Bordnetzes (N) mit dem Gaserzeuger (Z) verbindet, und
- daß die Parallelschaltung (S3, D2, D3) einen sich beim Unfall schließenden Kontakt (S3), sowie eine so gepolte Diode (D2, D3) enthält, daß beim Unfall ein Bordnetzzündstrom aus der Spannungsquelle (B) des Bordnetzes (N) über den Gaserzeuger (Z) mit einer über dem Gaserzeuger (Z) auftretenden Restspannung (V) geleitet wird,
•• zumindest solange das Bordnetz (N) intakt ist und
•• zumindest solange die dem Gaserzeuger (Z) aus dem Bordnetz (N) zuleitbare Restspannung (V) größer ist als die aktuelle Summenspannung (V12) der in Reihe geschalteten Zündkondensatoren (C).

6. Auslöseschaltung nach einem der vorhergehenden Patentansprüche,
**dadurch gekennzeichnet,**
- daß mehr Zündkondensatoren (C) als Gaserzeuger (Z) angebracht sind, und
- daß je ein Zündkondensator (C) einem Gaserzeuger (Z) fest zugeordnet ist, aber der weitere Zündkondensator (C), oder die weiteren Zündkondensatoren (C), mehreren Gaserzeugern (Z) zugeordnet sind,
so daß beim Unfall die einen Gaserzeuger (Z) mit Zündenergie beliefernde Reihenschaltung der Zündkondensatoren (C) jeweils einen dem betreffenden Gaserzeuger (Z) fest zugeordneten Zündkondensator (C) sowie mindestens einen weiteren Zündkondensator (C)
enthält.

7. Auslöseschaltung nach Patentanspruch 6,
**dadurch gekennzeichnet,**
- jedem fest zugeordneten Zündkondensator (C) ein eigener Zündschalter (S, T) zugeordnet ist, und
- daß eine, Sensorwerte auswertende Auswerteelektronik (P) einen oder mehrere der Zündschalter (T) individuell so steuert, daß die Zündung der Gaserzeuger (Z) zu verschiedenen Zeitpunkten erfolgt.

8. Auslöseschaltung nach einem der vorhergehenden Patentansprüche,
**dadurch gekennzeichnet,**
- daß mindestens einer der Crashsensoren (A) ein Safingsensor (A), also ein besonders empfindlicher Sensor (A) ist, dessen (A) - analoge oder digitale - Ausgangssignale - ausschließlich oder zusätzlich - deutlich Verzögerungen bzw. Beschleunigungen erkennen lassen, welche noch unterhalb jener Schwelle liegen, oberhalb welcher der Gaserzeuger (Z) gezündet wird.

9. Auslöseschaltung nach einem der vorhergehenden Patentansprüche,
bevorzugt nach Patentanspruch 8,
**dadurch gekennzeichnet,**
- daß mindestens ein Crashsensor (A1) analoge Ausgangssignale liefert, die mittels einer durch einen Mikroprozessor (P) gebildeten Auswerteelektronik in ein oder mehrere, einen oder mehrere Kontakte (T5, T6, T2) steuernde EIN-/AUS-Signale umgesetzt werden.

10. Auslöseschaltung nach einem der vorhergehenden Patentansprüche,
**dadurch gekennzeichnet,**
- daß an einen oder mehrere Schaltungspunkte zu Testzwecken vorübergehend eine oder mehrere Stromquellen (W) bzw. Spannungsquellen angeschaltet (T7) werden,
- daß während des Testes über den Gaserzeuger (Z) fließende Ströme zumindest kleiner sind, als zur Zündung des Gaserzeugers (Z) nötig wäre, und
- daß zumindest während des Testes Meßpunkte der Auslöseschaltung (über R6, R7, R8, R9, R10) mit einer Meßanordnung (M1, M2) verbunden sind.

11. Auslöseschaltung nach Patentanspruch 10,
**dadurch gekennzeichnet,**
- daß zu Testzwecken die Zündkondensatoren (C) hochohmig (über T4 / R5) in Reihe schaltbar sind.

## Claims

1. Triggering circuit for a crash sensor-controlled (A) protective system for the occupant of a vehicle, for example an air bag or seatbelt retractor arrangement,
- having a firing capacitor (C), which is charged before the accident to a capacitor voltage (U) from the vehicle's electrical system (N), as energy source for firing a gas generator (Z), that is to say for firing an explosive charge or for firing a firing cap (Z) of the explosive charge, and
- having at least one crash sensor (A),
•• which detects the occurrence of the sensor values which trigger the firing and
•• which controls, by means of one or more contacts (S, T), the firing of the gas generator (Z) by discharging the firing capacitor (C),
characterized in that
- a plurality of firing capacitors (C) are provided in a switching-over manner
•• which (C) are in fact connected in parallel before the accident and then charged to a capacitor voltage which corresponds to the voltage (U) of the vehicle's electrical system, and
•• which (C) are connected, in the case of the accident, in a low-impedance manner, by means of at least one single contact (S, T), in series in such a way that, at least at the start of firing, the instantaneous total voltage (V), via this series connection is greater than the individual capacitor voltages (U) in themselves, and
- in that the total voltage (V) can be fed in a low-impedance manner to the gas generator (Z) by means of at least a single contact (S, T).

2. Triggering circuit according to Patent Claim 1, characterized
- in that, at the start of firing, in fact directly after the actuation of the contact/contact(s) (S, T), the firing capacitors (C) are disconnected from the vehicle's electrical system (N) in a high-impedance manner (R1, R2, R4, possibly also D1, D2, D3) so that then as a result of this disconnection
•• the total voltage (V) is greater than the voltage (U, U1) in the vehicle's electrical system (N) and
•• the currents of the firing capacitors (C) flow essentially via the gas generator (Z) / gas generators (Z) instead of via the vehicle's electrical system (N).

3. Triggering circuit according to Patent Claim 2, characterized
- in that the high-impedance disconnection of at least part of the firing capacitors (C) from the vehicle's electrical system (N) is then formed by in each case at least one high-impedance resistor (R1, R2, R3, R4, D1) via which (R, D) the charging of the respective firing capacitors (C) also took place before the accident.

4. Triggering circuit according to Patent Claim 2 or 3, characterized
- in that the high-impedance disconnection is then formed by at least one diode (D) which has low impedance for the charging of the firing capacitors (C) and high impedance for the capacitor firing current which occurs in the case of an accident as long as the respective instantaneous firing capacitor voltage is greater than the instantaneous voltage (U, U1) in the vehicle's electrical system (N).

5. Triggering circuit according to one of the preceding patent claims, characterized
- in that a parallel connection (S3, D2, D3) is provided for the series connection, formed in the case of an accident, of the firing capacitors (C), the parallel connection (S3, D2, D3) connecting, in the case of an accident, the voltage source (B) of the vehicle's electrical system (N) to the gas generator (Z), and
- in that the parallel connection (S3, D2, D3) contains a contact (S3) which closes in the case of an accident, and a diode (D2, D3) with such a polarity that in the case of an accident a firing current of the vehicle's electrical system is conducted out of the voltage source (B) of the vehicle's electrical system (N) via the gas generator (Z) with a residual voltage (V) which occurs via the gas generator (Z),
•• for at least as long as the vehicle's electrical system (N) is intact and
•• for at least as long as the residual voltage (V) which can be fed to the gas generator (Z) from the vehicle's electrical system (N) is greater than the instantaneous total voltage (V12) of the firing capacitors (C) connected in series.

6. Triggering circuit according to one of the preceding patent claims, characterized
- in that more firing capacitors (C) than gas generators (Z) are provided, and
- in that each firing capacitor (C) is permanently assigned to a gas generator (Z) but the further firing capacitor (C) or the further firing capacitors (C) are assigned to a plurality of gas generators (Z), so that in the case of an accident the series connection, which supplies one gas generator (Z) with firing energy, of the firing capacitors (C) contains in each case one firing capacitor (C) which is permanently assigned to the respective gas generator (Z), and at least one further firing capacitor (C).

7. Triggering circuit according to Patent Claim 6, characterized
- in that each permanently assigned firing capacitor (C) is assigned its own firing switch (S, T), and
- in that an electronic evaluation system (P) which evaluates the sensor values controls one or more of the firing switches (T) individually in such a way that the firing of the gas generators (Z) takes place at different times.

8. Triggering circuit according to one of the preceding claims, characterized
- in that at least one of the crash sensors (A) is a safing sensor (A), that is to say a particularly sensitive sensor (A), whose (A) analog or digital output signals, exclusively or additionally, permit decelerations or accelerations to be clearly detected, which decelerations or accelerations still lie below that threshold above which the gas generator (Z) is fired.

9. Triggering circuit according to one of the preceding claims, preferably according to Patent Claim 8, characterized
- in that at least one crash sensor (A1) supplies analog output signals which are converted by means of an electronic evaluation device formed by a microprocessor (P) into one or more ON/OFF signals which control one or more contacts (T5, T6, T2).

10. Triggering circuit according to one of the preceding patent claims, characterized
- in that one or more current sources (W) or voltage sources are temporarily connected (T7) to one or more switching points,
- in that, in the case of the test, currents flowing via the gas generator (Z) are at least smaller than would be necessary to fire the gas generator (Z), and
- in that, at least in the case of the test, measuring points of the triggering circuit are connected (via R6, R7, R8, R9, R10) to a measuring arrangement (M1, M2).

11. Triggering circuit according to Patent Claim 10, characterized
- in that, for test purposes, the firing capacitors (C) can be connected in series in a high-impedance manner (via T4/R5).

## Revendications

1. Circuit de déclenchement d'un système de protection des passagers d'un véhicule commandé par un détecteur de collision (A), par un exemple un dispositif à coussin gonflable ou à tendeur de ceinture, comprenant :
- un condensateur de mise à feu (C) chargé à une tension de condensateur (U), avant l'accident, à partir du réseau électrique de bord (N), condensateur de mise à feu servant de source d'énergie pour la mise à feu d'un générateur de gaz (Z) donc pour la mise à feu d'une charge explosive ou pour la mise à feu d'un détonateur (Z) de la charge explosive, et
- au moins un détecteur de collision (A),
.. qui détecte la présence de valeurs de capteur déclenchant la mise à feu, et
.. qui commande, au moyen d'un ou de plusieurs contacts (S, T), la mise à feu du générateur de gaz (Z) par décharge du condensateur de mise à feu (C),
caractérisé en ce que,
- plusieurs condensateurs de mise à feu (C) sont montés d'une manière commutable,
.. ces condensateurs de mise à feu (C) étant branchés en parallèle avant l'accident et chargés à une tension de condensateur correspondant à la tension (U) du réseau de bord, et
.. ces condensateurs de mise à feu (C), étant en cas d'accident, étant branchés en série de façon faiblement ohmique, au moyen d'au moins un contact (S, T) unique, de manière qu'au moins au début de la mise à feu, la tension de somme (V) instantanée aux bornes de ce branchement en série, soit supérieure aux tensions (U) en soit individuelle des condensateurs,
et en ce que
- la tension de somme (V) est susceptible d'être appliquée de façon faiblement ohmique, au générateur de gaz (Z), à l'aide d'au moins un contact (S, T) unique.

2. Circuit de déclenchement selon la revendication 1, caractérisé en ce qu'
- au début de la mise à feu, c'est-à-dire tout de suite après l'actionnement du ou des contacts (S, T), les condensateurs de mise à feu (C) sont séparés du réseau de bord (N), de façon fortement ohmique (R1, R2, R4, éventuellement également D1, D2, D3) de manière que, suite à cette séparation,
.. la tension de somme (V) soit supérieure à la tension (U, U1) du réseau de bord (N), et
.. que les courants des condensateurs de mise à feu (C) passent essentiellement par le ou les générateurs de gaz (Z), au lieu de passer par le réseau de bord (N).

3. Circuit de déclenchement selon la revendication 2, caractérisé en ce que
- la séparation fortement ohmique réalisée entre au moins une partie des condensateurs de mise à feu (C) vis-à-vis du réseau de bord (N) est formée par au moins une résistance fortement ohmique (R1, R2, R3, R4, D1), par l'intermédiaire de laquelle (R, D) a également été réalisée la charge des condensateurs de mise à feu (C) concernés également avant l'accident.

4. Circuit de déclenchement selon la revendication 2 ou 3, caractérisé en ce que
- la séparation fortement ohmique est constituée d'au moins une diode (D) qui est faiblement ohmique pour la charge des condensateurs (C) et fortement ohmique pour le courant de mise à feu des condensateurs se produisant en cas d'accident, tant que la tension instantannée concernée des condensateurs de mise à feu est supérieure à la tension (U, U1) instantanée dans le réseau de bord (N).

5. Circuit de déclenchement selon l'une des revendications précédentes, caractérisé en ce qu'il est prévu
- un branchement (S3, D2, D3), en parallèle sur le branchement en série constitué en cas d'accident par les condensateurs de mise à feu (C), ce branchement en parallèle (S3, D2, D3) reliant, en cas d'accident, la source de tension (B) du réseau de bord (N) au générateur de gaz (Z), et
- en ce que le branchement en parallèle (S3, D2, D3) comprend un contact (S3) qui se ferme en cas d'accident, ainsi qu'une diode (D2, D3), polarisée de telle manière qu'en cas d'accident, un courant de mise à feu soit dirigé depuis la source de tension (B) du réseau de bord (N), à travers le générateur de gaz (Z), avec une tension résiduelle (V) aux bornes de ce générateur de gaz (Z),
.. au moins tant que le réseau de bord (N) est intact, et
.. au moins tant que la tension résiduelle (V) pouvant être appliquée au générateur de gaz (Z) depuis le réseau de bord (N) est supérieure à la tension de somme (V12) instantannée des condensateurs de mise à feu (C) branchés en série.

6. Circuit de déclenchement selon l'une des revendications précédentes, caractérisé en ce que
- le nombre de condensateurs de mise à feu (C) est supérieur au nombre de générateurs de gaz (Z), et en ce qu'
- un condensateur de mise à feu (C) est associé à demeure à un générateur de gaz (Z), tandis qu'un ou plusieurs condensateurs de mise à feu (C) supplémentaires sont associés à plusieurs générateurs de gaz (Z),
de sorte qu'en cas d'accident, le branchement en série de condensateurs de mise à feu (C), alimentant un générateur de gaz (Z) en énergie de mise à feu, comprenne respectivement un condensateur de mise à feu (C) associé à demeure au générateur de gaz (Z) concerné, ainsi qu'au moins un condensateur d'allumage (C) supplémentaire.

7. Circuit de déclenchement selon la revendication 6, caractérisé en ce qu'
- un interrupteur de mise à feu (S, T) est associé à chaque condensateur de mise à feu (C) associé à demeure, et en ce qu'
- une électronique d'évaluation (P), évaluant des valeurs issues de capteurs, commande individuellement un ou plusieurs des interrupteurs de mise à feu (T), de telle manière que la mise à feu des générateurs de gaz (Z) s'effectue à des instants différents.

8. Circuit de déclenchement selon l'une des revendications précédentes, caractérisé en ce qu'
- au moins l'un des capteurs de collision (A) est un capteur de sécurité (A), donc un capteur (A) particulièrement sensible, capteur (A) dont les signaux de sortie analogiques ou numériques, permettent d'identifier de façon nette, exclusivement ou en plus des décélérations ou des accélérations, situées encore au-dessous d'un seuil, au-dessus duquel le générateur de gaz (Z) est mis à feu.

9. Circuit de déclenchement selon l'une des revendications précédentes, de préférence selon la revendication 8, caractérisé en ce qu'
- au moins un détecteur de collision (A1) fournit des signaux de sortie analogiques, qui sont convertis, au moyen d'une électronique d'évaluation, constituée par un microprocesseur (P), en un ou plusieurs signaux partout ou rien commandant un ou plusieurs contacts (T5, T6, T2).

10. Circuit de déclenchement selon l'une des revendications précédentes, caractérisé en ce qu'
- une ou plusieurs sources de courant (W) ou sources de tension sont branchées temporairement (T7) en un ou plusieurs points de circuit, à des fins de test, en ce que
- pendant le test, les courants passant par le générateur de gaz (Z) sont au moins inférieurs à ceux qui seraient nécessaires pour la mise à feu du générateur de gaz (Z), et en ce qu'au moins pendant le test, des points de mesure du circuit de déclenchement sont reliés (par R6, R7, R8, R9, 10) à un dispositif de mesure (M1, M2).

11. Circuit de déclenchement selon la revendication 10, caractérisé en ce que
- les condensateurs de mise à feu (C) sont susceptibles d'être branchés en série, de façon fortement ohmique (par T4/R5), à des fins de test.
